# EUROPEAN PATENT APPLICATION

(11) **EP 1 535 982 A1**
(43) Date of publication of application: **01.06.2005**
(21) Application number: 03741153.5
(22) Date of filing: 02.07.2003
(51) Int. Cl.: C10B 53/02

(54) **CHARCOAL PRODUCING METHOD AND APPARATUS**

(30) Priority: 02.07.2002 JP 2002193727
(71) Applicant: Sanei Kensetsu Kabushiki Kaisha, Tsuru-shi, Yamanashi 402-0025 (JP)
(72) Inventor: KOMATSU, Toru, Yamanashi 402-0025 (JP)
(74) Representative: Thomas, Philip John Duval
(86) International application number: PCT/JP2003/008416
(87) International publication number: WO 2004/013256

(57) **Abstract**

Disclosed are charcoal production process and apparatus which can produce charcoal by high-temperature carbonization at a high temperature of 800°C or above. This charcoal production apparatus comprises: an in-kiln space 2 for placing therein a raw material 37 for charcoal; a flame port 3 and a vent hole 4 each provided at the front end of the space 2 within the kiln; a smoke discharge opening 5 provided at the rear end of the space 2 within the kiln; and air force feeding means for forcibly feeding air into the space 2 within the kiln. The air force feeding means comprises an air discharge opening 102 provided at the upper part of the space 2, within the kiln, at a portion near the smoke discharge opening 5 and the air discharge opening 102 comprises a blast pipe 100 provided toward the front end of the space 2 within the kiln.

## Description

### [FIELD OF THE INVENTION]

The present invention relates to an improvement in charcoal production process and apparatus. More particularly, the present invention relates to charcoal production process and apparatus that can produce charcoal by carbonization at a high temperature of 800°C or above.

### [BACKGROUND ART]

In recent years, charcoal has been used in various fields by virtue of its deodorization effect and toxic substance absorbing effect and the like. Charcoal has hitherto been generally produced by packing wood as a raw material for charcoal into a kiln formed by hardening soil, placing a firewood material on the wood and, in addition, packing a firewood material into a portion near a flame port, burning these firewood materials to carbonize the raw material for charcoal, closing a flame port when smoke discharged from a smoke-discharge opening has been changed from white to blue, and generally fully blocking off a vent hole and a smoke discharge opening after the elapse of 3 to 5 days from the closing of the flame port. On the other hand, a technique for introducing air into a kiln or a space within the kiln is known from patent laid-open publication documents such as Japanese Patent Laid-Open Nos. 119661/2000, 181646/2001, and 59642/1997.

In the above ordinary technique, however, charcoal is produced by carbonization at a low temperature (300 to 550°C). This charcoal has a high electric resistance value (from insulator to several MΩ) and is satisfactory as charcoal for living such as fuels. The charcoal, however, cannot satisfactorily adsorb harmful gases such as formaldehyde, benzene, toluene, xylene, ethyl benzene, and chlorobenzene and thus is unsatisfactory for producing industrial charcoal, particularly functional charcoal. Further, in the techniques disclosed in the patent laid-open publication documents, air is intentionally introduced into an in-kiln space to raise the temperature within the in-kiln space. In all of these techniques, however, the air is introduced into the lower part of the space within the kiln and is not satisfactorily diffused and thus does not reach the upper part of the space within the kiln. Therefore, the whole in-kiln space cannot be brought to a high temperature, and the raw material for charcoal could not have been treated at a high temperature.

### [SUMMARY OF THE INVENTION]

Accordingly, an object of the present invention is to provide charcoal production process and apparatus that can produce high-quality, high-temperature carbonized charcoal. In particular, the object of the present invention is to provide a process and an apparatus that are suitable for producing charcoal which has been carbonized at a high temperature of 800°C or above and has an electrical conductivity of not more than 10 Ω·cm in terms of volume resistivity (hereinafter often referred to as "high-temperature charcoal").

According to a first aspect of the present invention, there is provided a process for producing charcoal, comprising firing a raw material for charcoal placed in a kiln to thermally decompose the raw material for charcoal, characterized in that said process comprises a high-temperature refining step of forcibly feeding air into said kiln to keep the temperature within the kiln at 800°C or above.

Force feeding of air into the space within the kiln can activate the raw material for charcoal and thus can realize effective high-temperature refining. In this case, when water vapor is contained in the air, activation effect attained by the water vapor can be simultaneously expected. In the high-temperature refining step, preferably, the temperature within the kiln is kept at 800°C or above for 3 hr or more.

According to a second aspect of the present invention, there is provided a charcoal producing apparatus characterized by comprising: an in-kiln space for placing therein the raw material for charcoal; a flame port and a vent hole each provided at the front end of the space within the kiln; a smoke discharge opening provided at the rear end of the space within the kiln; and air force feeding means for forcibly feeding air into the space within the kiln.

The air force feeding means comprises a blast pipe which extends through the interior or the upper surface of the floor in the in-kiln space to a portion near the smoke discharge opening and has an air discharge opening in the space within the kiln. The air discharge opening is located at the upper part of the space within the kiln and is provided toward the front end of the space within the kiln, whereby the air forcibly fed from the blast pipe can be diffused into the whole interior of the kiln and the temperature within the kiln can easily be evenly held.

The space within the kiln comprises: a divergent part in which the width gradually increases from the flame port toward the center of the space within the kiln; a maximum width part which constitutes an approximate center part of the space within the kiln; and a convergent part in which the width gradually decreases from the maximum width part toward the smoke-discharge opening. The floor in the space within the kiln is provided so as to incline downward from the front end toward the rear end in the in-kiln space.

### [BRIEF DESCRIPTION OF THE DRAWINGS]

Fig. 1 is a sectional side view of one embodiment of the charcoal production apparatus according to the present invention;
Fig. 2 is a cross-sectional view taken on line A-A of Fig. 1;
Fig. 3 is a front view of an opening/closing door used in the charcoal production apparatus according to the present invention;
Fig. 4 is a front view of a fire grate used in the charcoal production apparatus according to the present invention;
Fig. 5 is a perspective view of a blast pipe used in the charcoal production apparatus according to the present invention; and
Fig. 6 is a graph showing a temperature change in a space within a kiln in the step of carbonization in the charcoal production process according to the present invention.

### [DETAILED DESCRIPTION OF THE INVENTION]

Embodiments of the charcoal production process and apparatus according to the present invention will be described in detail with reference to the accompanying drawings.

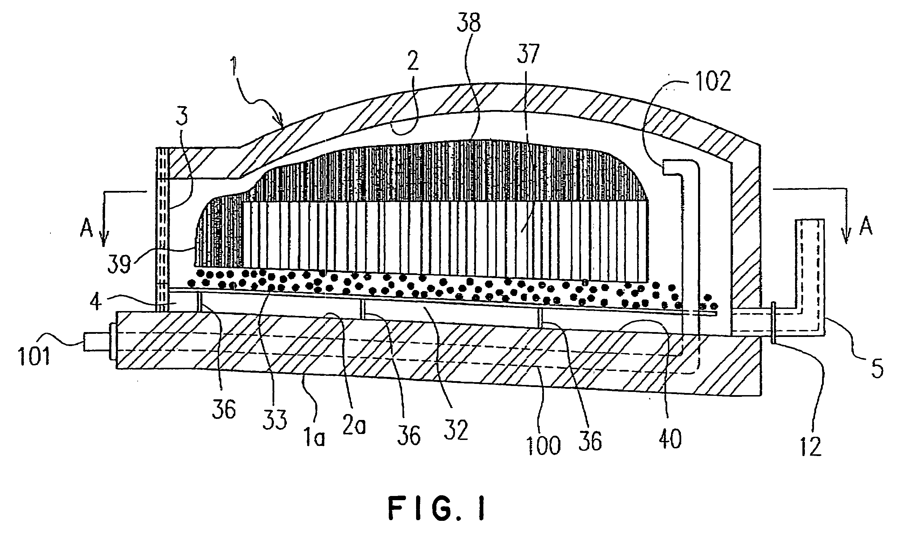

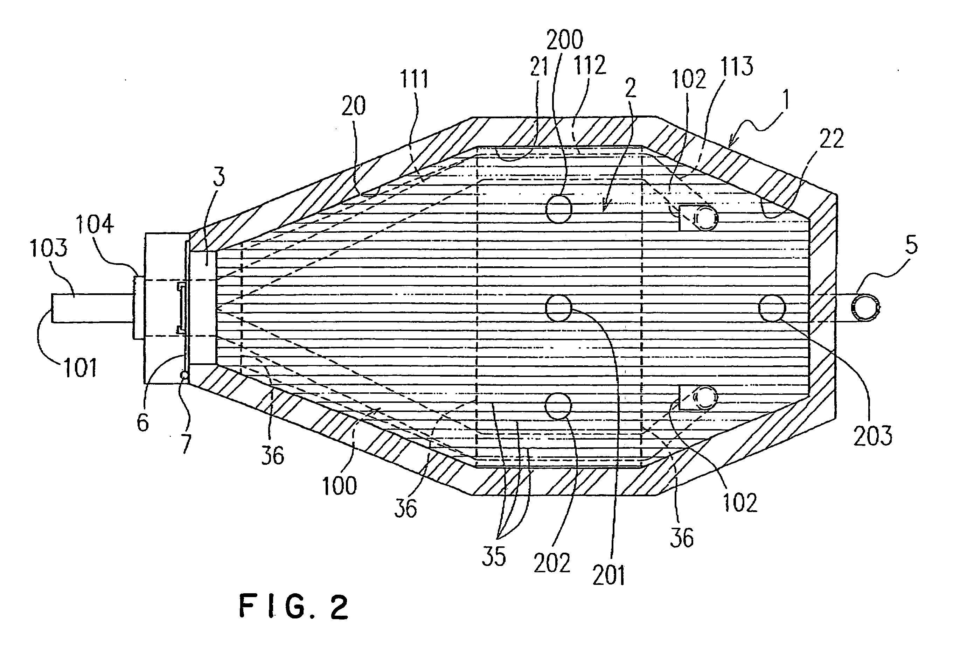

Figs. 1 and 2 show embodiments for carrying out the charcoal production process and apparatus according to the present invention. The charcoal production apparatus in this embodiment according to the present invention is provided with a combustion furnace 1. The combustion furnace 1 has an in-kiln space 2 for placing therein a raw material 37 for the production of charcoal. This combustion furnace 1 is formed of, for example, concrete, and the interior of the combustion furnace 1 is lined with refractory bricks. The raw material 37 for charcoal may be wood such as thinnings and wood wastes and bamboo.

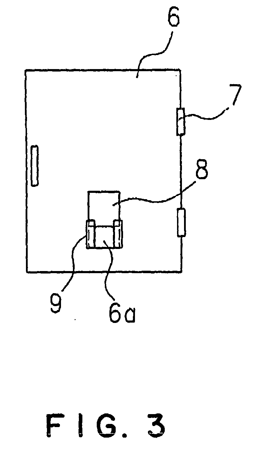

The combustion furnace 1 includes a flame port 3 and a vent hole 4 each provided at the front end of the in-kiln space 2, and a smoke discharge opening 5 provided at the rear end of the in-kiln space 2. The flame port 3 and the vent hole 4 can be opened/closed by an opening/closing door 6 shown in Fig. 3. This opening/closing door 6 is mounted, for example; with a hinge 7 on the combustion furnace 1. This opening/closing door 6 may be constructed so as to be opened/dosed manually or in a remote control manner.

An opening 6a communicatable with the vent hole 4 is provided at the lower part of the opening/closing door 6, and an opening/closing lid 8 for opening/closing this opening 6a is provided. This opening/closing lid 8 is mounted slidably in a vertical direction on a frame 9 fixed onto the opening/closing door 6. This opening/closing lid 8 is provided for allowing only the vent hole 4 to be opened/closed with the opening/closing door 6 closed.

The smoke discharge opening 5 is in a chimney form protruded from the lower part of the rear end of the combustion furnace 1, and an opening/closing door 12 for opening/closing the smoke discharge port 5 is disposed at a connection to the combustion furnace 1.

A raw material 37 for charcoal is placed in the center part of the in-kiln space 2, and firewoods 38, 39 are disposed at the upper part and the front part of the raw material 37 for charcoal. The raw material 37 for charcoal is fired with the firewoods 38, 39 and is then carbonized, and, in this case, air is introduced into the space 2 within the kiln through the vent hole 4. Smoke generated in the carbonization is discharged from the smoke discharge opening 5. This will be described later in more detail.

As shown in Fig. 2, in the apparatus according to the present invention, the in-kiln space 2 comprises: a divergent part 20 in which the width gradually increases from the flame port 3 toward the center of the space 2 within the kiln; a maximum width part 21 which is connected to the divergent part 20 and is provided substantially at the center part of the space 2 within the kiln; and a convergent part 22 which extends from the maximum width part 21 and in which the width gradually decreases toward the smoke discharge opening 5. According to this construction, as described later, when the raw material 37 for charcoal placed in the in-kiln space 2 is carbonized, air fed into the in-kiln space 2 through the vent hole 4 is easily introduced into the in-kiln space 2 and is diffused evenly in the in-kiln space 2, and the combustion gas is then smoothly transported toward the smoke discharge opening 5. Further, the floor 2a of the in-kiln space 2 is provided so as to incline downward from the flame port 3 toward the smoke discharge opening 5 (see Fig. 1). The inclination angle is preferably about 5 degrees. When the floor 2a is inclined downward toward the smoke discharge opening 5, hot air which travels on the floor 2a is likely to smoothly flow toward the smoke discharge opening 5.

The charcoal production apparatus according to the present invention is characterized by comprising air force feeding means for high temperature refining of the raw material 37 for charcoal.

As shown in Figs. 1, 2, and 4, the air force feeding means includes a blast pipe 100 embedded within a concrete floor wall 1a from the front end to the rear end of the combustion furnace 1. This blast pipe 100 includes an air introduction port 101 protruded from the front end toward the exterior of the concrete floor wall 1a, and an air discharge opening 102 protruded from the rear end of the concrete floor wall 1a into the space 2 within the kiln.

As shown in Fig. 2, a leading pipe 103 having the air introduction port 101 is detachably connected through a coupling 104. The air introduction port 101 is connected to a blower (not shown) for forcibly feeding air into the blast pipe 100.

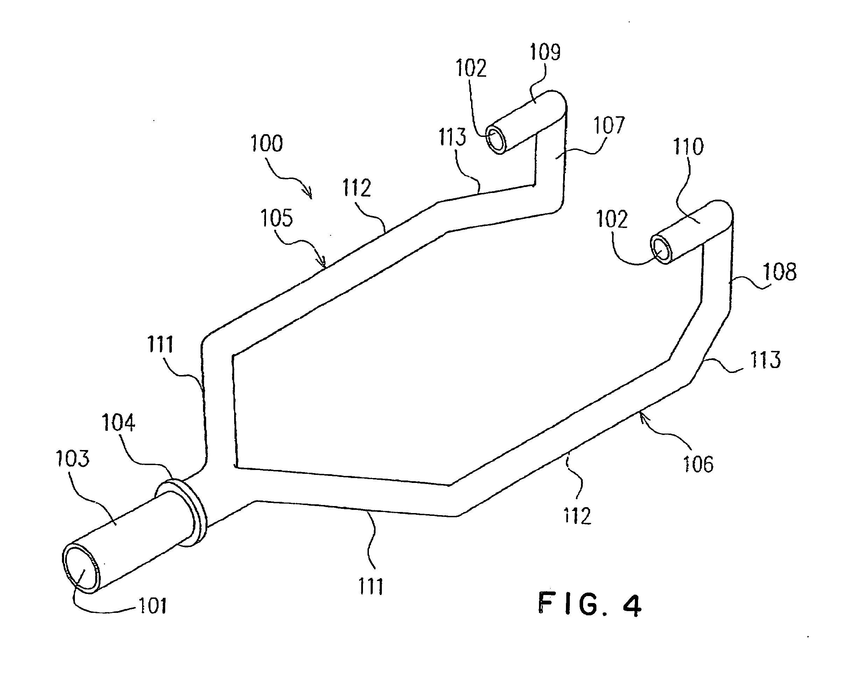

The blast pipe 100 will be described in more detail. As shown in Figs. 2 and 4, blast pipe 100 includes first and second horizontal parts 105, 106 which extend in a two-way form from a portion near the air introduction port 101, and standing parts 107, 108 which respectively extend upward from rear parts of the first and second horizontal parts 105, 106, that is, from a part near the smoke discharge opening 5. The first and second horizontal parts 105, 106 are embedded within the concrete floor wall 1a, and the standing parts 107, 108 are exposed from the concrete floor wall 1a to the space 2 within the kiln. Further, bending parts 109, 110 extending toward the front end of the in-kiln space 2 are provided respectively at the ends of the standing parts 107, 108. The air discharge opening 102 is provided at an open end of the bending parts 109, 110. Therefore, air is released from the air discharge opening 102 toward the fore of the in-kiln space 2. The air discharge opening 102 is preferably located at the upper part of in-kiln space 2 so that the released air is moved along the upper part of the in-kiln space 2 (see Fig. 1).

As shown in Figs. 2 and 4, the first and second horizontal parts 105, 106 may comprise a first part 111, which extends so as to correspond to the divergent part 20 of the in-kiln space 2, a second part 112, which extends so as to correspond to the maximum width part 21 in the in-kiln space 2, and a third part 113 which extends so as to correspond to the convergent part 22 in the in-kiln space 2. According to this construction, when the blast pipe 100 is provided in the in-kiln space 2, the blast pipe 100 can be disposed so as to conform to the shape of the in-kiln space 2. The space in which the raw material for charcoal is placed can be made as large as possible. The standing parts 107, 108 are disposed so as to pass through a fire grate 32 which will be described later.

The air forcibly fed into the air introduction port 101 from the blower (not shown) is branched in left and right horizontal parts 105, 106, is then released from left and right air discharge openings 102, is moved through over the raw material 37 for charcoal toward the front end of the in-kiln space 2, and sneaks from the front end to the lower side of the in-kiln space 2, so that it flows to the rear end. Thus, when air is intensively released from the air discharge opening 102 of the rear end into the in-kiln space 2, the temperature of the in-kiln space 2 is raised to activate the raw material 37 for charcoal, whereby high-temperature refining of the raw material 37 for charcoal is possible.

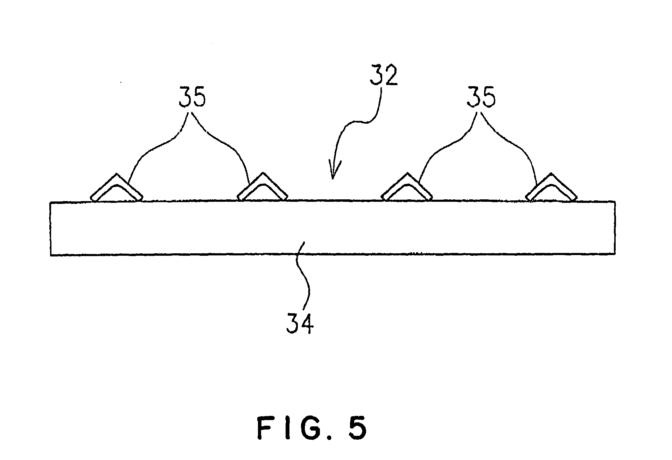

As shown in Fig. 1, predetermined gaps 40 as air passages are provided above the floor 2a of the combustion furnace 1, and a fire grate 32 is provided. This fire grate 32 extends from the flame port 3 in the combustion furnace 1 to a portion near the smoke discharge opening 5. As shown in Figs. 2 and 5, the fire grate 32 is provided in a lattice form using a plurality of rod-like transverse members 34 and a plurality of rod-like longitudinal members 35 linked to the transverse members 34. Further, in order to provide the predetermined gaps 40, the fire grate 32 is mounted on the floor 2a of the in-kiln space 2 through receiving members 36 (see Figs. 1 and 2). This fire grate 32 provides air passages on the floor 2a of the in-kiln space 2. Air fed through the vent hole 4 and air which is released from the air discharge opening 102 in the blast pipe 100 and sneaks from the front end of the in-kiln space 2 are passed through the air passages and are discharged from the rear end of the in-kiln space 2 into the smoke discharge opening 5. Fuel coal 33 such as scrap coal is evenly disposed on the upper surface of the fire grate 32. This fuel coal 33 releases radiation heat in carbonization refining of the raw material 37 for charcoal to contribute to homogenization of the in-kiln temperature. The raw material 37 for charcoal is arranged on the fuel coal 33 in a conventional embodiment, for example, in a standing state.

In Fig. 2, numerals 200, 201, 202, and 203 each designate a thermometer disposed at a suitable position of the in-kiln space 2. The thermometer 200 is a thermometer for high-temperature region measurement provided on the upper step in the center part, the thermometer 201 is a thermometer for medium-temperature region measurement provided on the middle step in the center part, and the thermometer 202 is a thermometer for low-temperature region measurement provided on the lower step in the center part. The thermometer 203 is a thermometer for low-temperature region measurement provided near the smoke discharge opening 5. These thermometers are connected to a controller (not shown). The controller regulates the feed rate of air or closes/opens the flame port 3, the vent hole 4, and the smoke discharge opening 5 based on the temperatures of the in-kiln space 2 measured with these thermometers, and the state of the step of carbonization attributable to this temperature.

Next, the production process of charcoal using the charcoal production apparatus having the above construction will be described.

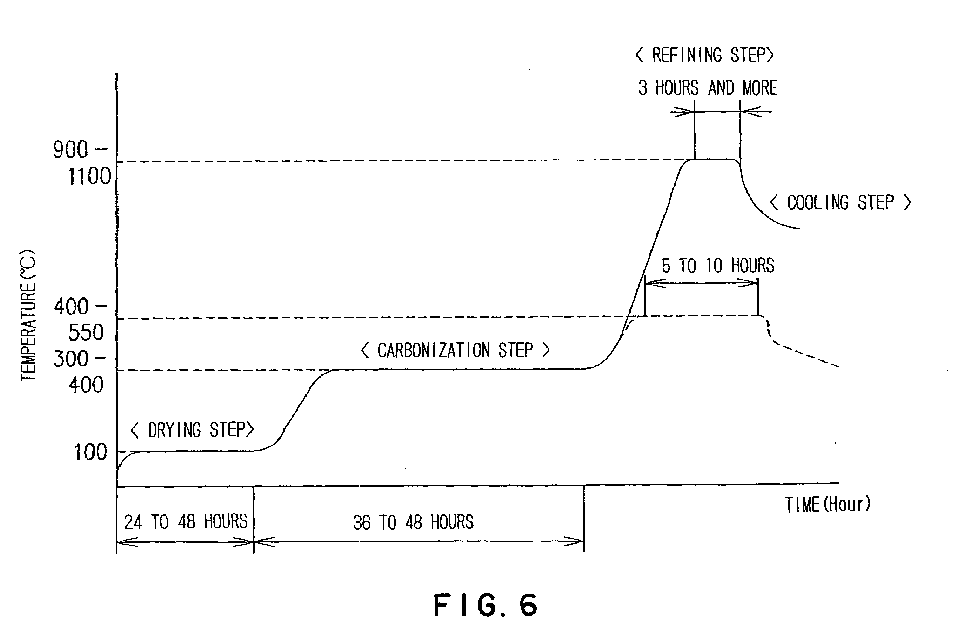

At the outset, the raw material 37 for charcoal such as wood or bamboo is placed on the fire grate 32 through the fuel coal 33. Next, firewood 38 is placed on the upper part of the raw material 37 for charcoal, and then firewood 39 is placed on the flame port 3. The firewood 39 placed on the flame port 3 is fired. Fire gradually moves into the firewood 38 located on the upper part of the raw material 37 for charcoal to initiate the step of drying the raw material 37 for charcoal. As shown in Fig. 6, this step of drying is continued at a temperature around 100°C (value measured with the thermometer 201) for about 24 to 48 hr. As the drying of the raw material 37 for charcoal proceeds and the temperature within the kiln gradually increases, the step of drying is transferred to the step of carbonization to initiate thermal decomposition of the raw material 37 for charcoal. Upon transfer to the step of carbonization, the flame port 3 is closed. In such a state that the vent hole 4 is opened, external air is allowed to flow into gaps 40 on the lower side of the fire grate 32. The step of carbonization is continued at an in-kiln temperature in the range of 300 to 400°C (value measured with the thermometer 201) for about 36 to 48 hr. When the carbonization enters a termination stage, the in-kiln temperature increases to 400 to 550°C (value measured with the thermometer 201) and bluish smoke is released from the smoke discharge opening 5, indicating that the step advances to the step of refining. After the transfer to the step of refining is confirmed, air is forcibly fed from the blower (not shown) into the blast pipe 100. This force feeding air is released from the air discharge opening 102 in the blast pipe 100 into the rear end of the in-kiln space 2 and energetically flows along the upper part of the in-kiln space 2 toward the front end. The forcibly fed air sneaks from the front end of the in-kiln space 2 toward the downward side and, passes through gaps 40 on the lower side of the fire grate 32, again flows toward the rear end side, and is finally discharged through the smoke discharge opening 5.

Thus, the temperature within the in-kiln space 2 is raised by forcibly feeding air into the in-kiln space 2 to increase the amount of oxygen. Further, radiation heat obtained from the burned coal 33 is also increased by creating the flow of air also on the lower side of the fire grate 40 to homogenize the in-kiln temperature, whereby high-temperature refining of the raw material 37 for charcoal can be realized. In particular, forcibly feeding air to keep the in-kiln temperature at 900 to 1100°C (value measured with the thermometer 201) followed by refining in this temperature range for 3 hr or more is desired. High-temperature refining at an in-kiln temperature of 800°C or above is possible. When the in-kiln temperature is excessively high, there is a fear of causing an adverse effect on the quality of charcoal. Therefore, care should be taken so that the temperature does not become 1200°C or above. The force air blow rate is set by the in-kiln volume. For example, when the in-kiln volume is 16 m³, the force air blow rate is preferably about 10 to 20 m³/min. In feeding the air, when the air is forcibly fed as a mixture with water vapor, the in-kiln space 2 can be further activated. The amount of water vapor in this case is preferably about 0.5 to 2.0 liters/min when the in-kiln value is 16 m³.

As shown in Fig. 6, upon the completion of the step of refining, the force feeding of the air is stopped and, at the same time, the vent hole 4 and the smoke discharge opening 5 are immediately completely sealed. The combustion furnace 1 is kept in this state for a few days to cool the interior of the combustion furnace 1. The combustion furnace 1 is then opened, and charcoal is taken out of the in-kiln space 2. As indicated by a dotted line in Fig. 6, the step of refining in the charcoal production process is generally carried out at an in-kiln temperature of about 400 to 550°C for 5 to 10 hr.

The charcoal taken out of the combustion furnace 1 is high-temperature charcoal. The high-temperature charcoal has a high level of capability of adsorbing formaldehyde, benzene, toluene, xylene, ethyl benzene, chlorobenzene and the like. Therefore, when this high-temperature charcoal is mixed with low-temperature charcoal having a high level of capability of adsorbing ammonia, amine and the like, both the adsorption property of the high-temperature charcoal and the adsorption property of the low-temperature charcoal can be utilized and, consequently, a wide variety of harmful gases can be adsorbed.

In the above embodiment, embedding of the blast pipe 100 in the concrete floor wall 1a has been described. In the present invention, the gaps 40 which are provided as air passages below the fire grate 32 can be utilized. In this case, the provision of a large number of air release holes in the first and second horizontal parts 105, 106 allows air to be fed upward from the lower side of the in-kiln space 2.

As described above, according to the charcoal production process of the present invention, in the latter half in the step of carbonization, air is forcibly fed into the in-kiln space to keep the in-kiln air at a temperature of 800°C or above. This can realize high-temperature refining of the raw material for charcoal and can realize the production of high-temperature charcoal in a simple manner.

Further, the charcoal production apparatus of the present invention is constructed so that the air forcibly fed into the in-kiln space is circulated vertically within the kiln. Therefore, the temperature difference between the upper part and the lower part within the in-kiln space is reduced, and refining treatment can always be carried out evenly at a high temperature to produce high-temperature charcoal with stable quality.

## Claims

1. A process for producing charcoal, comprising firing a raw material for charcoal placed in a kiln to thermally decompose the raw material for charcoal, **characterized in that** said process comprises at least a high-temperature refining step of forcibly feeding air into said kiln to keep the temperature within the kiln at 800°C or above.

2. The process for producing charcoal according to claim 1, wherein water vapor is contained in air to be forcibly fed.

3. The process for producing charcoal according to claim 1, wherein the high-temperature refining step is carried out by bringing the temperature within the kiln at 800°C or above and holding this state for 3 hr or more.

4. A charcoal producing apparatus **characterized by** comprising at least: an in-kiln space for placing therein the raw material for charcoal; a flame port and a vent hole each provided at the front end of the space within the kiln; a smoke discharge opening provided at the rear end of the space within the kiln; and air force feeding means for forcibly feeding air into the space within the kiln.

5. The charcoal producing apparatus according to claim 4, wherein said air force feeding means comprises an air discharge opening provided at the upper part of the space, within the kiln, at a portion near the smoke discharge opening and the air discharge opening comprises a blast pipe provided toward the front end of the space within the kiln.

6. The charcoal producing apparatus according to claim 4, wherein the floor in the space within the kiln is provided so as to incline downward from the front end toward the rear end.

7. The charcoal producing apparatus according to claim 4, wherein the space within the kiln comprises: a divergent part in which the width gradually increases from the flame port toward the center of the space within the kiln; a maximum width part which constitutes an approximate center part of the space within the kiln; and a convergent part in which the width gradually decreases from the maximum width part toward the smoke-discharge opening.

8. The charcoal producing apparatus according to claim 4, wherein the inner wall of the kiln is formed of refractory bricks.
